(19) Europäisches Patentamt

European Patent Office

Office européen des brevets

(11) **EP 1 465 058 A2**

(12) **EUROPEAN PATENT APPLICATION**

(43) Date of publication:
**06.10.2004 Bulletin 2004/41**

(51) Int Cl.7: **G06F 7/72**

(21) Application number: **04101380.6**

(22) Date of filing: **02.04.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(30) Priority: **04.04.2003 SG 200301780**

(71) Applicant: **ST Microelectronics Asia Pacific (Pte)
Ltd
Singapore 569508 (SG)**

(72) Inventor: **Plessier, Bernard
239196 Singapore (SG)**

(74) Representative: **Jorio, Paolo, Dr. Ing. et al
Studio Torta S.r.l.,
Via Viotti, 9
10121 Torino (IT)**

(54) **Method and apparatus for performing modular multiplication**

(57) An apparatus and method is disclosed for performing the modular operation S=AB mod N. The apparatus is arranged such that the constant J0 which is ordinarily required in order to complete the operation is not required to be explicitly computed, thus simplifying and speeding up the operation.

FIGURE 4

EP 1 465 058 A2

**Description**

**Background of the invention**

Many electronic interactions require the provision of a certain level of security to ensure that the data contained in a message transfer is difficult to intercept and decode, and/or is capable of being verified as being genuine. To achieve these ends, it is possible to encrypt data according to one of many possible schemes. A popular scheme is called public key cryptography (e.g. PGP). Public key cryptography enables a particular message to be encoded according to an individual's private key and a third party's public key - both are long fixed numbers. The message may then be decoded by the third party through use of their private key. In this way, each party may keep their private key secret and thus control who is able to receive and decode any given message.

One of the key elements of encryption systems is the ability to be able to perform modular arithmetic. The basic calculation which is performed may be written as :

$$S = AB \bmod N \tag{1}$$

where $A$, $B$ and $N$ are large numbers, typically including many hundreds of digits.

Cryptography systems are generally mathematically complex and can pose a high computational overhead on any system which implements them.

**Description of the Prior Art**

Prior art systems for performing modular arithmetic make use of Montgomery's theorem, which has been used in many software and hardware implementations of modular arithmetic algorithms. Implementations using Montgomery's theorem are able to compute a value for S without first multiplying A and B and then dividing by $N$. Most of the hardware implementations rely on an iterative approach which decomposes $A$ into $k$ blocks of $p$ bits to limit the size of the hardware operators required. Further advances have used a serial architecture to further reduce the circuit size. Such architectures are generally based around two serial multipliers, FIFO elements and the pre-computation of a constant $J_0$, such that :

$$J_0.N \equiv -1 \bmod 2^p \tag{2}$$

$k$ and $p$ are both positive integers, and the binary representation of a positive integer $X$, where $X < 2^{kp}$ may be given by:

$$X = \sum_{i=0}^{k-1} X[i]2^i \tag{3}$$

where $0 \leq X[i] < 2$, i.e. $X$ may be either 0 or 1.

Throughout this specification, square brackets [ ] refer to a particular bit position in a multi-bit word e.g. X[i] refers to the $i^{th}$ bit of word X. Angle brackets < > refer to a particular block of a multi-bit word e.g. X<i> refers to the $i^{th}$ block of word X. Parentheses ( ) refer to the value of a word at a particular iteration of a loop function e.g. X(i) refers to the value of word X at the $i^{th}$ iteration.

A definition for $X[j:k]$, where $j > k$, is that $X$ is a positive integer having a total length of $j+1-k$ bits, such that $X[j]$ is the MSB and $X[k]$ is the LSB.

The base $2^p$ representation of $X$ is given by:

$$X = \sum_{i=0}^{k-1} X\langle i\rangle 2^{pi} \tag{4}$$

where $0 \leq X\langle i\rangle < 2^p$

In the following description, it is assumed that N is an odd integer such that $2^{p\langle k-1\rangle} < N < 2^{kp}$, and that both *A* and *B* are less than *N*. A *p*-bit constant, $J_0$, is thus defined as:

$$J_0.N\langle 0\rangle \equiv -1.\text{mod } 2^p \tag{5}$$

*N* is the modulus number which is used in all public key cryptography systems. It is defined as the product of two large prime numbers (i.e. »2) and must therefore be odd.

The prior art hardware implementation of the Montgomery theorem may be described by the following pseudo-code.

```
1.    procedure MM-BASIC(A,B,N)
2.      S(-1) = 0
3.      for i = 0 to k - 1
4.          T = S(i - 1) + A⟨i⟩B
5.          Y₀ = (T.J₀) mod 2ᵖ
6.          S(i) = (T + NY₀)/2ᵖ
7.          if S(i) ≥N then S(i) = S(i) − N
8.      end for
```

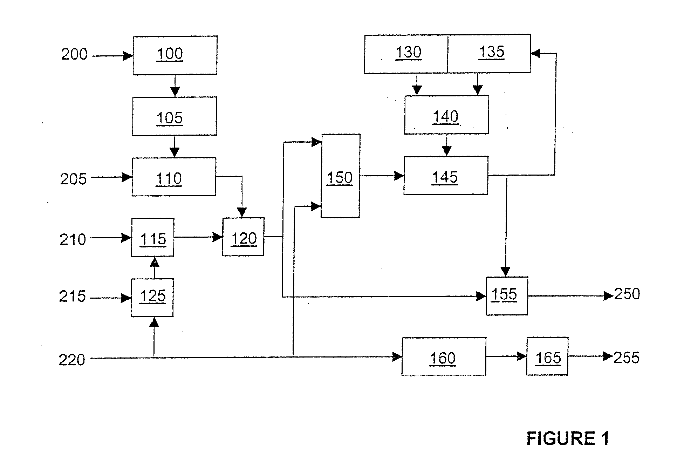

The implementation of this pseudo code in hardware is shown in a simplified form in Figure 1. The architecture is constructed in serial form so that one bit of the solution is generated for each clock cycle. Such an architecture, as opposed to a parallel one, minimises the amount of hardware required at the expense of speed.

The circuit of figure 1 is arranged to receive five different input signals: *A[k]* 200; *B[t]* 205; *S(i-1)* 210; *GE(i-1)* 215; and *N[t]* 220.

Serial Multiplier 110 accepts as inputs, a fixed p-bit word, $A\langle i\rangle$ produced by register 105, and a one-bit data stream *B[t]* 205. It then acts to produce the output, $(A\langle i\rangle.B)$, one bit at a time.

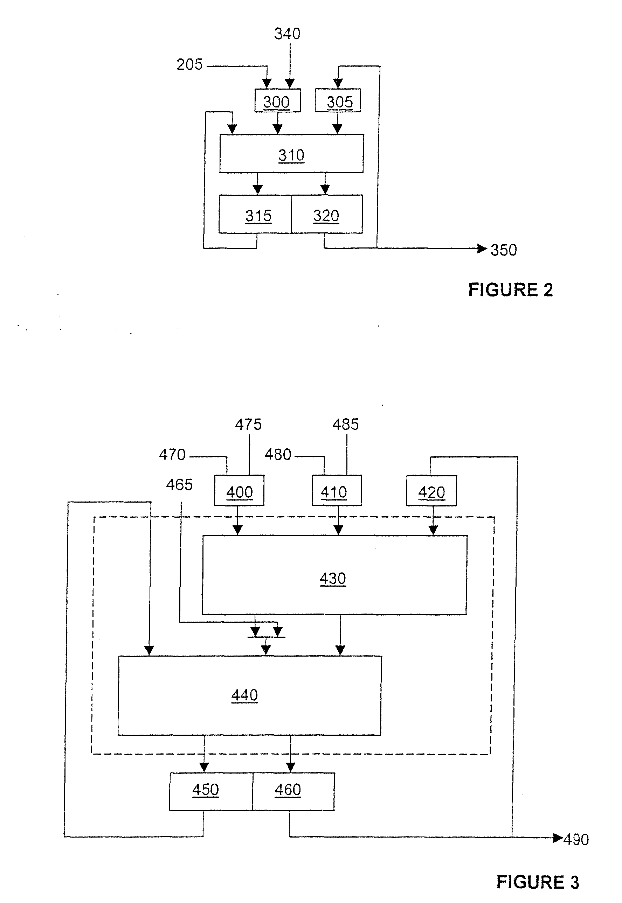

Multiplier 110 is configured internally as shown in Figure 2. The two inputs are the output 340 of register 105 and *B[t]* 205. The two inputs 205, 340 are ANDed together in AND gate 300. The result of this operation is fed into Carry Save Adder 310, along with two other inputs. The first of these other inputs is the carry output (C) derived from the fed back output from p-bit register 315. The other input to the Adder is derived from the result output (R) of p-bit register 320 which has been divided by 2 in divider 305. Registers 315, 320 are positioned immediately after the Carry Save Adder 310 and each receives one of the twin outputs produced by the adder.

The Carry Save Adder 310 is arranged to transform a sum of three numbers into a sum of two numbers such that:

$$2.C + R = X + Y + Z \tag{6}$$

The Carry Save Adder 310 computes *C(t)* and *R(t)* based on the following bitwise Boolean equations.

$$C(t) = (C(t - 1) \text{ OR } R(t - 1) / 2) \text{ AND } (C(t - 1) \text{ AND } B[t].A\langle i\rangle) \text{ AND } (R(t - 1) / 2 \text{ AND } B[t].A\langle i\rangle) \tag{7}$$

$$R(t) = C(t - 1) \oplus R(t - 1) / 2 \oplus B[t].A\langle i\rangle \tag{8}$$

In a simplified notation:

$$C(t), R(t) = \text{SERIAL\_MULT } (B[t].A\langle i\rangle. C(t-1), R(t-1)) \tag{9}$$

The procedure MM_BASIC, already shown, may be written in a form which shows the serial operations explicitly:

```
1.    procedure MM-SERIAL(A, B, N)
2.      S(-1) = 0
3.      GE(-1) = 0
4.    for i = 0 to k-1
5.          #computation of Y₀
6.        for t = 0 to p-1
7.              C_S1(t), R_S1(t) = SERIAL_SUB(C_S1(t-1), GE(i-1) . N[t], S(i-1)[t])
8.              C_M1(t), R_M1(t) = SERIAL_MULT(B[t] . A⟨i⟩, C_M1(t-1), R_M1(t-1))
9.              C_A1(t), R_A1(t) = SERIAL_ADD(C_A1(t-1), R_M1(t)[0], R_S1(t))
10.             C_M2(t), R_M2(t) = SERIAL_MULT(R_A1(t) . J_0, C_M2(t-1), R_M2(t-1))
```

```
11.             Y_0[t] = R_M2(t)
12.       end for
13.         # mail loop: computation of S(i)
14.       for t = 0 to kp+p-1
15.             C_S1(t), R_S1(t) = SERIAL_SUB(C_S1(t-1), GE(i-1) . N[t], S(i-1)[t])
16.             C_M1(t), R_M1(t) = SERIAL_MULT(B[t] . A⟨i⟩, C_M1(t-1), R_M1(t-1))
17.             C_A1(t), R_A1(t) = SERIAL_ADD(C_A1(t-1), R_M1(t)[0], R_S1(t))
18.             C_M2(t), R_M2(t) = SERIAL_MULT(R_A1(t) . J_0, C_M2(t-1), R_M2(t-1))
19.             C_A2(t), R_A2(t) = SERIAL_ADD(C_A1(t-1), R_M2(t)[0], R_A1(t))
20.             S(i)[t-p] = R_A2(t)
21.             SGE(t) = SERIAL_GE(SGE(t-1), N[t-p], S(i)[t-p])
22.       end for
23.       GE(i) = SGE(kp+p-1)
24.   end for
```

The total number of clock cycles required to compute the result according to the above scheme is $k(kp+2p)$.

**Summary of the Present Invention**

In a first broad form the present invention provides Apparatus having inputs A, B and N, and an output S, said apparatus being arranged to perform a modular operation, S=A.B mod N, the apparatus including a 2-stage Carry Save Adder (2-CSA) and a 1-stage Carry Save Adder (1-CSA), the 2-CSA being arranged to receive 5 input signals:

☐ $U_0$, being the partial product of N and $Y_0$;
☐ $U_1$, being the subtraction of a previous version of S and $U_6$ wherein $U_6$ is either N or 0 depending on the value of the comparison between the result of the previous iteration and N.
☐ $U_2$, being the partial product of B with the current version of A;

☐ $U_3$, being S/2
☐ $U_4$, being the carry output of the 1-CSA;

where result and carry outputs of the 2-CSA form two of three inputs to the 1-CSA, wherein the result (R) output of the 1-CSA is the desired result (S), and the third input to the 1-CSA is a compensation signal arranged to allow S to be calculated without knowing the constant $J_0$, where $J_0N<0> = -1$. mod $2^p$, where p is a block length into which A is sub-divided.

In a second broad form, the present invention provides An iterative method of performing a modular operation of S = A.B mod N, where A, B and N are encoded as multi-bit digital words, including the following steps:

a) setting S(-1) to 0, and i to 0
b) setting S(i) to $(S(i-1) + A<i>B + NY_0)/2^p$
c) setting S(i) to (S(i) - N) if $S(i) \geq N$
d) repeating steps b) and c) k times.

wherein:

i is a loop counter;
k is a number of blocks of p bits length into which A is divided;
$Y_0 = ((T.J_0) \bmod 2^p)$;
$J_0N = -1 \bmod 2^p$;and

$Y_0$ is calculated one bit at a time, based on the fact that $(T + NY_0)$ is a multiple of $2^p$.

Other features and benefits of the invention will become apparent in the following description of various embodiments of the invention.

## Brief Description of the Drawings

For a better understanding of the present invention and to understand how the same may be brought into effect, the invention will now be described by way of example only, with reference to the appended drawings in which:

Figure 1 shows a simplified prior art circuit for implementing modular arithmetic according to Montgomery's theorem;

Figure 2 shows a prior art serial/parallel multiplier or carry save adder;

Figure 3 shows a merged multiplier as used in embodiments of the invention; and

Figure 4 shows a hardware implementation according to an embodiment of the invention.

## Detailed Description of the Preferred Embodiments

The present invention retains a serial architecture to accomplish the calculation, but embodiments of the inventions do not require pre-knowledge of the constant, $J_0$. Embodiments of the invention calculate $Y_0 = ((T. J_0) \bmod 2^p)$ one bit at a time, based on the fact that $(T + NY_0)$ must be a multiple of $2^p$. In this way, the complex mathematical functions required to pre-compute $J_0$ can be dispensed with.

With this implicit knowledge, the procedure MM-BASIC described previously, may now be written as MM-SIMPLE:

```
1.    procedure MM-SIMPLE(A, B, N)
2.    S(-1) = 0
3.    for i = 0 to k-1
4.         S(i) = (S(i-1) + A⟨i⟩B + NY₀)/2ᵖ
5.         if S(i) ≥N then S(i) = S(i) − N
6.    end for
```

The above serial implementation of MM-SIMPLE is more efficient than the prior art implementation of MM-BASIC as the two multipliers required in the prior art can be merged into a single multiplier in embodiments of the invention. The gain, in terms of fewer components, is a total of 2p registers plus the two serial adders 120 and 155. The removal of the need for these components removes a significant amount of circuitry, and thus the resulting architecture requires less space and consumes less power to achieve the same result. It also calculates the result in fewer clock cycles.

Figure 3 shows the resultant hardware implementation which may be used to perform the steps of procedure MM-SIMPLE presented above.

$Y_0$ is computed bit by bit during the first $p$ cycles of the loop, starting at line 15 of the procedure MM-SERIAL. Assuming that at cycle $q<p$, the bits 0, 1,...$q$-1 have already been computed, leaving only bit $q$ to be discovered.

According to embodiments of the present invention, if, at cycle q, the LSB of the 2-stage Carry Save Adder shown in Figure 3 is '1', then $N[q:0]$ is added to the intermediate result, and $Y_0[q] = 1$.

This may be proved as follows. At the $q^{th}$ step, the intermediate values from the first Carry Save Adder may be given as :

$$S = 2C + R \tag{10}$$

$$= (A\langle i\rangle.B[q : 0] + Y_0[q - 1 : 0].N[q : 0] + S\langle i - 1\rangle[q : 0]) / 2^q \tag{11}$$

Assuming that the $q^{th}$ bit of $Y_0$ is a '1', then the above equation may be re-written as:

$$S' = (A\langle i\rangle.B[q : 0] + (2^q + Y_0[q - 1 : 0]).N[q : 0] + S\langle i - 1\rangle[q : 0]) / 2^q \tag{12}$$

$$= S + N[q:0] \tag{13}$$

As the LSB of N is always 1, since it is a large prime number and, therefore, odd, then from the above equations, it can be seen that the LSBs of S and S' are always inverted. Therefore, it is possible to guarantee that the LSB of the result is 0 in the first p steps by choosing either S or S'. The choice of S' implies that the $q^{th}$ bit of $Y_0$ must be forced to equal 1.

The above step is repeated at each cycle q<p, so that at the end all bits of $Y_0$ are discovered.

The procedure, MM-SERIAL-SIMPLE shown below is a pseudo-code implementation of an embodiment of the present invention, and is a version of the previously presented MM-SERIAL adapted according to the above results.

```
1.    procedure MM-SERIAL-SIMPLE(A, B, N)

2.    S(-1) = 0

3.    GE(-1) = 0

4.    for i = 0 to k-1

5.          # main loop: computation of S(i)

6.          for t = 0 to kp+p-1

7.                C_{S1}(t), R_{S1}(t) = SERIAL_SUB(C_{S1}(t-1), GE(i-1) . N[t], S(i-1)[t])

8.                C_{int}, R_{int} = 2-STAGE_CSA(B[t] . A⟨i⟩, C_M(t-1), R_M(t-1)/2, N[t] . Y_0)

9.                if t < p and R_{int}[0] = 1 then

10.                     C_M(t), R_M(t) = CSA(N[t:0], C_{int}, R_{int})

11.                     Y_0[t] = 1

12.               else

13.                     C_M(t), R_M(t) = C_{int}, R_{int}

14.               end if

15.               S(i)[t-p] = R_M(t)[0]

16.               SGE(t) = SERIAL_GE(SGE(t-1), N[t-p], S(i)[t-p])

17.          end for

18.          GE(i) = SGE(kp+p-1)

19.    end for
```

The conditional statement at line 9 of the above procedure may be considered to trigger a compensation event which, if $t<p$ and $R_{int}[0] = 1$, causes the value of register 525 $N_{del}$ to be applied to the input of the 1-stage CSA (1-CSA) 540. If the condition is not satisfied, then the C and R outputs of the 2-stage CSA (2-CSA) 520 merely feed straight into the 1-CSA and no compensation is performed.

It is the addition of the compensation function which directly removes the need to explicitly compute $J_0$.

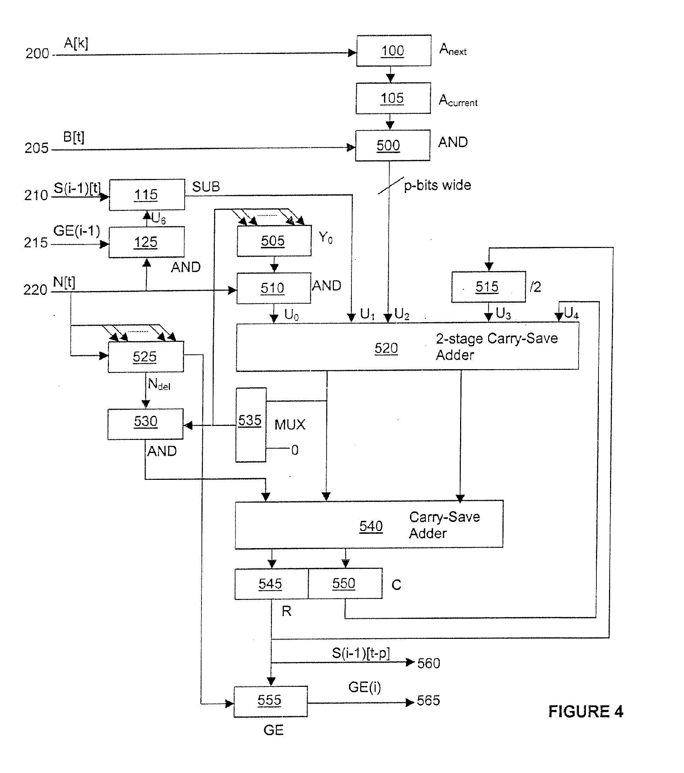

In figure 4, the compensation function is implemented by register 525, AND gate 530, MUX 535. The MUX 535 effectively performs the conditional IF statement of line 9 of MM-SERIAL-SIMPLE, and if $R_{int}[0]$ is equal to 1, then the contents of register 525 is applied to 1-CSA 540.

The above procedure (MM-SERIAL-SIMPLE) is further explained in the procedure below (MM-SERIAL-SIMPLE_enhanced), which includes further details on selected ones of the internal signal nets.

These internal nets are labelled from $U_0$ to $U_8$ and directly correspond with selected internal nets shown in Figure 4.

```
1.    procedure MM-SERIAL-SIMPLE_enhanced(A, B, N)
2.        S(-1) = 0
3.        GE(-1) = 0
4.        A_next = A[p-1:0]
5.        for i = 0 to k-1
6.            # main loop: computation of S(i)
7.            N_del = 0
8.            Y_0 = 0
9.            R = 0
10.           C = 0
11.           A_current = A_next
12.           A_next = A[(i+1)(p-1):(i+1)p]
13.           for t = 0 to kp+p-1
14.               U_0 = AND2(N[t], Y_0)
15.               U_6 = AND1(GE(i-1), N[t])
16.               U_1 = SUB1(U_6, S(i-1[t]))
17.               U_2 = AND3(B[t], A_current)
18.               U_3 = R/2
19.               U_4 = C
20.               C_int, R_int = 2-STAGE-CSA(U_0, U_1, U_2, U_3, U_4)
21.               U_7 = MUX(R_int[0],0)
22.               U_5 = AND4(U_7, N_del)
23.               if t < p then
24.                   Y_0[t] = U_7
25.                   N_del[t] = N[t]
```

```
26.              U₈ = 0
27.          else
28.              # N_del acts as a shift register
29.              U₈ = N_del[0]
30.              N_del = N_del/2
31.              N_del[p-1] = N[t]
32.          endif
33.          C,R = CSA(U₅, C_int, R_int)
34.          S(i)[t] = R[0]
35.          SGE(t) = GE(U₈, R[0])
36.       end for
37.       GE(i) = SGE(kp+p-1)
38.    end for
```

As an example, presented below are details of how an embodiment of the invention operates on some sample input data. The following inputs are provided, in 32-bit format:

$A$ = C7197F0E

$B$ = CCEFBAE4_77AF9EE5_848D8AE6

$N$ = D077EC53_F4AA27A4_D7816723

The result of the Montgomery multiplication *of A* by *B* is given by $(AB+NY_0)/2^p$. Before the computation starts, the registers of the multiplier are initialised as follows.

$N_0$ = 00000003

$Y_0$ = 00000000

RC = 0_00000000

$B[t]$ = 6

$N[t]$ = 3

For the sake of simplicity, the registers $R$ and $C$ have been summed into register RC, and the computation is performed 4 bits (a nibble) at the time, thus setting *p=4*.

1. Computation of the intermediate results, based on the partial products

$N[t]. Y0$          = 0_00000000

+*B[t].A*          = 4_AA98FA54

+*RC/16*          = 0_00000000

=*Intermediate*          = 4_AA98FA54

2. Find the first 4 bits of compensation value (Z) such that the 4 LSBs of *Intermediate*+$Z.N_0$ are all zero.

$Z$          = 4

3. Add the partial product $Z.N_0$ to *Intermediate*

*Intermediate*          = 4_AA98FA54

+$Z. N_0$          = 0_0000000C

=RC          = 4_AA98FA60

4. Update the registers with the new values and restart the cycle

$N_0$ = 00000023 $Y_0$ = 00000004 RC = 4_AA98FA60 $B[t]$ = E $N[t]$ = 2

1. Computation of the intermediate results, based on the partial products

$N[t]. Y0$          = 0_0000008C

| | | |
|---|---|---|
| +B[t].A | = A_E364F2C4 | |
| +RC/16 | = 0_4AA98FA6 | |
| =Intermediate | = B_2E0E8272 | |

2. Find first 4 bits of compensation (Z) such that the 4 lsb of *Intermediate*+$ZN_0$ are all zero.

    Z          = A

3. Add the partial product $Z.N_0$ to *Intermediate*

    Intermediate          = B_2E0E8272
    +$Z.N_0$          = 0_0000015E
    =RC          = B_2E0E83D0

4. Update the registers with the new values and restart the cycle

$N_0$ = 00000723 $Y_0$ = 000000A4 RC = B_2E0E83D0 B[t] = A N[t] = 7

1. Computation of the intermediate results, based on the partial products

    N[t]. Y0          = 0_0000047C
    +B[t].A          = 7_C6FEF68C
    +RC/16          = 0_B2E0E83D
    =Intermediate          = 8_79DFE345

2. Find first 4 bits of compensation (Z) such that the 4 lsb of *Intermediate*+Z.N0 are all zero.

    Z          = 9

3. Add the partial product $Z.N_0$ to *Intermediate*

    Intermediate          = 8_79DFE345
    +$Z.N_0$          = 0_0000403B
    =$SUM_2$          = 8_79E02380

4. Update the registers with the new values and restart the cycle

    $N_0$ = 00006723 $Y_0$ = 000009A4 RC = 8_79E02380      B[t] = 8      N[t] = 6

This process is repeated until all the bits of $Y_0$ are discovered. At this stage, the compensation phase is no longer needed so the computation iterates over the remaining bits of B and N. The step by step result at each phase is given by the following table:

| Cycle | $N_0$ | $Y_0$ | RC | B[t] | N[t] |
|---|---|---|---|---|---|
| 0 | XXXXXXXX | XXXXXXXX | XXXXXXXXXX | X | X |
| 1 | 00000003 | 00000000 | 0000000000 | 6 | 3 |
| 2 | 00000023 | 00000004 | 04AA98FA60 | E | 2 |
| 3 | 00000723 | 000000A4 | 0B2E0E83D0 | A | 7 |
| 4 | 00006723 | 000009A4 | 0879E02380 | 8 | 6 |
| 5 | 00016723 | 000009A4 | 06C06A3480 | D | 1 |
| 6 | 00816723 | 000A09A4 | 0A88602800 | 8 | 8 |
| 7 | 07816723 | 000A09A4 | 06E1A24810 | 4 | 7 |
| 8 | D7816723 | 090A09A4 | 03CE530470 | 8 | D |
| 9 | D7816723 | 790A09A4 | 0CCFBD7800 | 5 | 4 |
| 10 | 4D781672 | 790A09A4 | 0694A37956 | E | A |
| 11 | A4D78167 | 790A09A4 | 1007138AC1 | E | 7 |
| 12 | 7A4D7816 | 790A09A4 | 0F331C6EEC | 9 | 2 |
| 13 | 27A4D781 | 790A09A4 | 08E52B51B4 | F | A |
| 14 | A27A4D78 | 790A09A4 | 10F3358755 | A | A |
| 15 | AA27A4D7 | 790A09A4 | 0D9096AF69 | 7 | 4 |
| 16 | 4AA27A4D | 790A09A4 | 082EE40AE8 | 7 | F |
| 17 | F4AA27A4 | 790A09A4 | 0D0C374AAC | 4 | 3 |

(continued)

| Cycle | $N_0$ | $Y_0$ | RC | B[t] | N[t] |
|---|---|---|---|---|---|
| 18 | 3F4AA27A | 790A09A4 | 0558478DCE | E | 5 |
| 19 | 53F4AA27 | 790A09A4 | 0D961B9BD4 | A | C |
| 20 | C53F4AA2 | 790A09A4 | 0E4CD923F9 | B | E |
| 21 | EC53F4AA | 790A09A4 | 1011728ED1 | F | 7 |
| 22 | 7EC53F4A | 790A09A4 | 0FFADBDE3B | E | 7 |
| 23 | 77EC53F4 | 790A09A4 | 0F3258F423 | C | 0 |
| 24 | 077EC53F | 790A09A4 | 0A485783EA | C | D |
| 25 | D077EC53 | 790A09A4 | 101F39EA3A | 0 | 0 |
| 26 | 0D077EC5 | 790A09A4 | 0101F39EA3 | 0 | 0 |
| 27 | 00D077EC | 790A09A4 | 00101F39EA | 0 | 0 |
| 28 | 000D077E | 790A09A4 | 000101F39E | 0 | 0 |
| 29 | 0000D077 | 790A09A4 | 0000101F39 | 0 | 0 |
| 30 | 00000D07 | 790A09A4 | 00000101F3 | 0 | 0 |
| 31 | 000000D0 | 790A09A4 | 000000101 F | 0 | 0 |
| 32 | 0000000D | 790A09A4 | 0000000101 | 0 | 0 |
| 33 | 00000000 | 790A09A4 | 0000000010 | 0 | 0 |
| 34 | 00000000 | 790A09A4 | 0000000001 | 0 | 0 |

Notice that the serial output result can be read directly as the right most nibble of the RC column. It is also interesting to notice the shifting pattern of $N_0$. From cycle 1 to 8, the register behavior is comparable to a stack, where the nibble are pushed from the left. From cycle 9 onward, the register behaves as a right shift register. The output of this register shall be used as the input of a comparator which detects if the results is greater or equal to $N$.

$Y = 790A09A4$

$RESULT= 1\_01F39EA3\_AA3B194E\_C8954C16\_00000000$

In the light of the foregoing description, it will be clear to the skilled man that various modifications may be mode within the scope of the invention.

The present invention includes and novel feature or combination of features disclosed herein either explicitly or any generalisation thereof irrespective of whether or not it relates to the claimed invention or mitigates any or all of the problems addressed.

**Claims**

1. Apparatus having inputs A, B and N, and an output S, said apparatus being arranged to perform a modular operation, S=A.B mcd N, the apparatus including a 2-stage Carry Save Adder (2-CSA) and a 1-stage Carry Save Adder (1-CSA), the 2-CSA being arranged to receive 5 input signals:

   ☐   $U_0$, being the partial product of N and $Y_0$;
   ☐   $U_1$, being the subtraction of a previous version of S and $U_6$ wherein $U_6$ is either N or 0 depending on the value of the comparison between the result of the previous iteration and N.
   ☐   $U_2$, being the partial product of B with the current version of A;
   ☐   $U_3$, being S/2
   ☐   $U_4$, being the carry output of the 1-CSA;

   where result and carry outputs of the 2-CSA form two of three inputs to the 1-CSA, wherein the result (R) output of the 1-CSA is the desired result (S), and the third input to the 1-CSA is a ccmpensation signal arranged to allow S to be calculated without knowing the constant $J_0$, where $J_0 N<0> = -1. \mod 2^p$, where p is a block length into which A is sub-divided.

2. Apparatus as claimed in claim 1 wherein the compensation signal is arranged to equal a delayed version of N in the event that t<p and the Result (R) output of the 2-CSA equals '1'.

**3.** Apparatus as claimed in any one of the preceding claims wherein the 2-CSA includes two 1-CSA arranged in series.

**4.** Apparatus as claimed in any one of the preceding claims wherein while processing bits 0 to p-1, register $Y_0$ is arranged such that the LSB of the Result (R) output of the 1-CSA is always '0'.

**5.** Apparatus as claimed in any one of the preceding claims wherein the apparatus is arranged to take the form of a custom integrated circuit.

**6.** Apparatus as claimed in claim 5 wherein the custom integrated circuit includes a digital signal processor (DSP).

**7.** An iterative method of performing a modular operation of S = A.B mod N, where A, B and N are encoded as multi-bit digital words, including the following steps:

a) setting S(-1) to 0, and i to 0
b) setting S(i) to $(S(i-1) + A<i>B + NY_0)/2^p$
c) setting S(i) to (S(i) - N) if S(i) $\geq$N
d) repeating steps b) and c) k times.

wherein:

i is a loop counter;
k is a number of blocks of p bits length into which A is divided;
$Y_0 = ((T.J_0)$ mod $2^p)$;
$J_0N = -1mod2^p$; and

$Y_0$ is calculated one bit at a time, based on the fact that $(T + NY_0)$ is a multiple of $2^p$.

FIGURE 1

340

205

300 305

310

315 320

→350

FIGURE 2

475 485

470 480

465

400 410 420

430

440

450 460

→490

FIGURE 3

EP 1 465 058 A2

FIGURE 4

15